# EUROPÄISCHE PATENTSCHRIFT

(11) **EP 3 273 315 B1**
(45) Veröffentlichungstag und Bekanntmachung des Hinweises auf die Patenterteilung: **18.10.2023**
(21) Anmeldenummer: 16180179.0
(22) Anmeldetag: 19.07.2016
(51) Int. Cl.: G05B 19/042

(54) **PLATTFORM ZUR WEITERNUTZUNG BESTEHENDER SOFTWARE FÜR DIE ANSTEUERUNG INDUSTRIELLER FELDGERÄTE**
PLATFORM FOR FURTHER USE OF EXISTING SOFTWARE FOR CONTROLLING INDUSTRIAL FIELD DEVICES
PLATEFORME DESTINEE A REUTILISER UN LOGICIEL EXISTANT POUR LA COMMANDE D'APPAREILS DE TERRAIN INDUSTRIELS

(43) Veröffentlichungstag der Anmeldung: 24.01.2018
(73) Patentinhaber: ABB Schweiz AG, 5400 Baden (CH)
(72) Erfinder: Hauck-Stattelmann, Stefan, 68789 St.Leon-Rot (DE); Sehestedt, Stephan, 68165 Mannheim (DE); Harding, Jeffrey, Fort Meyers, FL 33905 (US); Koziolek, Heiko, 76227 Karlsruhe (DE)
(74) Vertreter: Maiwald GmbH

(56) Entgegenhaltungen:
- EP-A1- 2 642 360
- EP-A2- 2 306 256
- EP-A2- 2 682 829
- WO-A1-2004/010645
- DE-A1-102007 043 328
- DE-A1-102008 019 053
- DE-A1-102011 107 318
- US-A1- 2012 209 411
- US-A1- 2014 269 744

## Beschreibung

Die Erfindung bezieht sich auf das Fachgebiet der speicherprogrammierbaren Steuerungen für die Ansteuerung industrieller Feldgeräte.

### Stand der Technik

Zur Überwachung und Steuerung vieler industrieller Prozesse werden speicherprogrammierbare Steuerungen (SPS) oder andere Steuergeräte der Automatisierungstechnik eingesetzt. Derartige Geräte sind spezialisierte Computer, auf denen eine Software läuft, die speziell für das jeweils angesteuerte bzw. überwachte Feldgerät entwickelt wurde. Teilweise ist die Software sogar spezifisch für die Industrieanlage, in der das Feldgerät eingesetzt wird.

Die Software ist eng mit dem Betriebssystem und den Hardwaretreibern des Steuergeräts, auf dem sie läuft, verwoben, denn alle Daten, die vom oder zum Feldgerät kommuniziert werden, müssen das Steuergerät passieren. Das hat zur Folge, dass ein Austausch des Steuergeräts gegen ein anderes Modell oder eine wesentliche Änderung des Kommunikationssystems (etwa I/O-System, Feldbus oder anderes Netzwerk) zwischen dem Steuergerät und dem Feldgerät jeweils eine manuelle Anpassung der Software erforderlich macht. Dabei muss sichergestellt sein, dass die Software auch nach der Anpassung noch die gleiche Funktionalität besitzt wie zuvor. Speziell bei sicherheitsrelevanten Anwendungen sind alle Änderungen prüfpflichtig. Der hierfür nötige Arbeitsaufwand kann höhere Kosten verursachen als der eigentliche Hardwaretausch. Die Vorteile, die mit der Modernisierung eines industriellen Steuerungssystems erzielt werden können, werden durch diesen Zusatzaufwand vergällt. Entsprechend schwierig ist es, dem Anwender eine derartige Modernisierung zu verkaufen.

Aus der US 5,307,346 A ist eine Schnittstelle bekannt, das ein in einem Netzwerk einer Industrieanlage verwendetes einheitliches Kommunikationsprotokoll, wie beispielsweise das Manufacturing Automation Protocol (MAP), bidirektional in verschiedene Kommunikationsstandards für die Ansteuerung von Feldgeräten übersetzt. Änderungen im Netzwerk zwischen dieser Schnittstelle und dem Feldgerät können vor der Steuersoftware, die der Schnittstelle nach wie vor über MAP anspricht, maskiert werden. Die Bindung der Steuersoftware an die Hardware des Steuergeräts bleibt hiervon unberührt.

EP 2 682 829 A2 offenbart ein Steuergerät, in dem die Steuerungsfunktion durch einen Hypervisor von der Hardware abstrahiert ist. Hiermit wird das Ziel verfolgt, bei Austausch einer ersten Version der Steuersoftware gegen eine zweite Version beide Versionen parallel laufen zu lassen und durch Vergleich der Ausgaben beider Versionen die Prüfung der zweiten Version auf Funktionsfähigkeit in der vorgesehenen Anwendung zu vereinfachen.

EP 2 642 360 A1 offenbart ein Prozesssteuerungssystem, in dem Steuergeräte in der gleichen Weise virtualisiert sind. Hier wird mit der Virtualisierung das Ziel verfolgt, bestehende Software bei Austausch der Hardware von Steuergeräten weiternutzen zu können.

US 2012/209 411 A1) offenbart ebenfalls ein Prozesssteuerungssystem mit virtualisierten Steuergeräten. Die Virtualisierung wird genutzt, um ein abnormal arbeitendes Steuergerät zu erkennen und zu isolieren.

### Aufgabe und Lösung

Es ist daher die Aufgabe der Erfindung, auch nach einer Änderung der Hardware des Steuergeräts, über das das Feldgerät angesteuert wird, und/oder nach einer Änderung der Netzwerkverbindung zu dem Feldgerät, eine Weiternutzung der bestehenden Steuersoftware ohne Anpassungen zu ermöglichen.

Diese Aufgabe wird erfindungsgemäß gelöst durch eine Plattform gemäß Hauptanspruch sowie durch ein zugehöriges Computerprogrammprodukt. Weitere vorteilhafte Ausgestaltungen ergeben sich aus den darauf rückbezogenen Unteransprüchen.

### Gegenstand der Erfindung

Die Erfindung wird durch die Patentansprüche definiert. Beispiele, die nicht unter die Patentansprüche fallen, werden präsentiert, um die beanspruchte Erfindung zu veranschaulichen und ihr Verständnis zu erleichtern.

Im Rahmen der Erfindung wurde eine Plattform zur Ansteuerung mindestens eines industriellen Feldgeräts in einer Industrieanlage mit einer Steuersoftware entwickelt. Diese Plattform umfasst eine Ausführungsumgebung, in der die Steuersoftware lauffähig ist, sowie eine Außenschnittstelle für die Kommunikation zwischen der Steuersoftware und dem Feldgerät.

Erfindungsgemäß weist die Ausführungsumgebung virtuelle Hardware auf, die sich aus Sicht der Steuersoftware wie das Feldgerät verhält. Zwischen die virtuelle Hardware und die Außenschnittstelle ist eine Vermittlungseinheit der Plattform geschaltet. Diese Vermittlungseinheit ist dazu ausgebildet, zwischen der Steuersoftware und der virtuellen Hardware ausgetauschte Daten bidirektional für die Kommunikation mit dem Feldgerät über die Außenschnittstelle zu übersetzen. Dabei ist die Vermittlungseinheit in der Regel kein simpler Protokolladapter mit einer 1:1-Übersetzung, sondern berücksichtigt die semantische Bedeutung der Datenfelder in der zwischen der virtuellen Hardware und der Steuersoftware gesprochenen Sprache einerseits und in der über die Außenschnittstelle gesprochenen Sprache andererseits.

Die Steuersoftware wurde für ein konkretes Steuergerät geschrieben, wobei es sich um einen spezialisierten, zur Ansteuerung oder Überwachung des Feldgeräts ausgebildeten Computer handelt. Die Steuersoftware ist mit dem Betriebssystem und den Hardwaretreibern dieses Steuergeräts verwoben.

Die Ausführungsumgebung stellt virtualisiertes Betriebssystem bereit, das beispielsweise dem Betriebssystem entsprichen kann, für das die Steuersoftware entwickelt wurde. Eine als Binärcode für ein bestimmtes Steuergerät kompilierte Steuersoftware kann dann in der Ausführungsumgebung unverändert ausgeführt werden. Alternativ oder in Kombination kann die Ausführungsumgebung Programmbibliotheken (APIs) bereitstellen, die die Semantik der Sprache, in der die Steuersoftware ursprünglich geschrieben wurde, neu implementieren, d.h. bei einem Funktionsaufruf aus der Steuersoftware genau die Funktion ausführen, die bei diesem Funktionsaufruf auf der Originalplattform ausgeführt wird. Die Ausführungsumgebung kann beispielsweise auch einen Interpreter für eine Interpretersprache bereitstellen, in der die Steuersoftware geschrieben ist. Dieser Interpreter kann dann eine als Quelltext vorliegende Steuersoftware ausführen und insoweit die Interpretersprache implementieren. Die Ausführungsumgebung kann insbesondere als portable Softwarekomponente realisiert sein. Die Steuersoftware kann aus mehreren Steuerprogrammen oder Steuerschleifen bestehen.

Die virtuelle Hardware ist spezifisch für das von der Steuersoftware anzusteuernde Feldgerät. Sie liegt als Gerätetreiber in dem virtualisierten Betriebssystem vor.

Es wurde erkannt, dass die Plattform gemäß der Erfindung die in der Steuersoftware steckende, für die jeweilige Anwendung spezifische Steuerungslogik von der Hardware des Steuergeräts und von der Art der Netzwerkverbindung des Steuergeräts zum Feldgerät entkoppelt. Alle Anpassungen an die Hardware des Steuergeräts lassen sich in der Ausführungsumgebung zusammenfassen. Alle Anpassungen hinsichtlich der Netzwerkverbindung zum Feldgerät lassen sich in der Vermittlungseinheit zusammenfassen. Soll also etwa die Steuersoftware bei unveränderter Funktion auf eine neue Hardware migriert oder das Feldgerät über eine andere Art von Netzwerk angebunden werden, so ist es im Gegensatz zum bisherigen Stand der Technik nicht mehr erforderlich, in ein monolithisches Programm einzugreifen, in dem die eigentliche Steuerungslogik mit Anweisungen zum Hardware- und Netzwerkzugriff vermischt ist. Stattdessen sind jeweils nur die Ausführungsumgebung, und/oder die Vermittlungseinheit, anzupassen.

Auch diese Anpassungen erfordern einen Aufwand. Es wurde jedoch erkannt, dass durch den modularen Aufbau gemäß der Erfindung dieser Aufwand deutlich reduziert wird, da insbesondere die jeweils erforderlichen Tests überschaubarer werden. Es wurde weiterhin erkannt, dass derartige Anpassungen generisch sind, also vielfach für andere Projekte wiederverwendet werden können: Die Ausführungsumgebung ist zunächst nur spezifisch für den Typ des Steuergeräts, für den die Steuersoftware geschrieben wurde. Idealerweise ist lediglich die hierin enthaltene virtuelle Hardware, die als Treiber vorliegt, für das angesteuerte Feldgerät spezifisch. Die Vermittlungseinheit wiederum kann für die Kombination aus einem konkret angesteuerten Feldgerät und einem für die Anbindung über die Außenschnittstelle verwendeten Kommunikationsstandard spezifisch sein, ist aber unabhängig vom Typ des Steuergeräts, für den die Steuersoftware geschrieben wurde. Es lässt sich also ein Baukasten mit vorgefertigten Elementen erstellen, aus denen sich für den konkreten Anwendungsfall, dass eine bestimmte Steuersoftware für ein bestimmtes Feldgerät auf einem bestimmten Typ von Steuergerät weitergenutzt werden soll, jeweils die Lösung zusammensetzen lässt.

Damit wandelt sich die Anpassung einer Steuersoftware an ein neues Steuergerät letztlich von einer sehr arbeitsintensiven und fehleranfälligen Einzelanfertigung zu einem vielfach verwendbaren abstrakten Werkzeug, das dementsprechend auch separat als Produkt bzw. als Dienstleistung verkaufbar ist.

In jedem konkreten Anwendungsfall wiederum werden durch die Erfindung die Kosten für die Migration einer Steuersoftware von einem Steuergerät auf ein anderes, sowie auch für Änderungen der Netzwerkanbindung zum Feldgerät, deutlich reduziert.

Dadurch wird es in vielen Fällen überhaupt erst wirtschaftlich, eine derartige Migration durchzuführen, etwa auf eine neue Version des Steuerungssystems. Nach dem bisherigen Stand der Technik war der Aufwand für die Migration der Steuersoftware eine starke Barriere gegen solche Migrationen, zumal die Anpassung der Steuersoftware vielfach ein nur beim Anwender selbst vorhandenes Wissen erforderte und daher nicht oder nur eingeschränkt als externe Dienstleistung zugekauft werden konnte. Durch die Migration auf ein neues Steuergerät kann zum Einen zusätzliche Funktionalität hinzugewonnen werden. Zum Anderen können Wartungskosten für veraltete Steuergeräte eingespart werden.

Industrielle Steuerungsanlagen werden typischerweise für eine Lebensdauer von mehreren Jahrzehnten projektiert. Nicht jeder Hersteller von Steuergeräten garantiert über so lange Zeiträume eine Verfügbarkeit typgleicher Geräte bei Defekten. Nach dem bisherigen Stand der Technik konnte ein solcher Defekt dem Anwender von heute auf morgen die Anpassung der eigenen Steuersoftware an ein neues Steuergerät auferlegen. Teilweise wurde dies umgangen, indem zu einem überhöhten Preis ein veraltetes Steuergerät aus Restbeständen oder gar am Gebrauchtmarkt erworben wurde. Die Erfindung ermöglicht es bei derartigen Defekten, das aktuelle Mainstream-Steuergerät mit deutlich besserem Preis-Leistungs-Verhältnis deutlich schneller in das bestehende Steuerungssystem zu integrieren.

Innerhalb einer Industrieanlage ermöglicht es die Erfindung, die Hardware für Steuergeräte zu standardisieren und so die Kosten für Beschaffung und Wartung zu reduzieren.

In einer besonders vorteilhaften Ausgestaltung der Erfindung umfasst die Ausführungsumgebung eine virtuelle Maschine, die ihrerseits vermittelt durch ein Betriebssystem auf einer Hardware läuft. Dies ermöglicht es, auch auf ein und derselben Hardware mehrere derartige virtuelle Maschinen nebeneinander zu betreiben und so beispielsweise mehrere Steuergeräte in einen leistungsfähigen Industrie-PC zu konsolidieren. Weiterhin können derartige Maschinen über eine Managementschicht in einfacher Weise überwacht, gestoppt, gestartet oder umkonfiguriert werden. Schließlich bietet eine virtuelle Maschine auch maximale Flexibilität hinsichtlich der darin laufenden Steuersoftware. So kann die Steuersoftware beispielsweise auf eine bestimmte alte Systemsoftware angewiesen sein, die wiederum mangels Hardwaretreibern auf aktuellen Steuergeräten nicht mehr läuft. In einer virtuellen Maschine kann die alte Systemsoftware weiterhin verwendet werden.

Vorteilhaft wirken die virtuelle Hardware, die Vermittlungseinheit und/oder die virtuelle Maschine über eine zusätzliche Abstraktionsschicht mit dem Betriebssystem zusammen. Alle Anpassungen, die beim Einsatz verschiedener Betriebssysteme notwendig werden, können dann in dieser Abstraktionsschicht gebündelt werden. Es wird dann einfacher, die Plattform für verschiedene Betriebssysteme auf verschiedenen Hardwarearchitekturen bereitzustellen. Die in der Abstraktionsschicht vorzunehmenden Anpassungen sind einsichtiger als entsprechende Anpassungen unmittelbar in der virtuellen Hardware, in der Vermittlungseinheit und/oder in der virtuellen Maschine, wo die zu ändernden Zugriffe auf das Betriebssystem jeweils mit Anweisungen für die interne Logik der jeweiligen Komponente vermischt sind.

Die Ausführungsumgebung kann beispielsweise dazu ausgebildet sein, Steuersoftware auszuführen, die in einer standardisierten Sprache gemäß IEC 61131-3 oder in einer proprietären Steuerprogrammsprache, insbesondere ASEA Master Programming Language oder Taylor Control Language, vorliegt. Die Unterstützung für weitere Steuerprogrammsprachen kann durch entsprechende Anpassung der Ausführungsumgebung abstrakt hinzugefügt werden, ohne dass hierzu eine konkrete Steuersoftware vorliegen muss.

In einer weiteren besonders vorteilhaften Ausgestaltung der Erfindung ist ein zusätzliches Gateway vorgesehen, welches über eine erste Schnittstelle mit der Außenschnittstelle und über eine zweite Schnittstelle mit dem Feldgerät verbunden ist. Auf diese Weise kann der Kommunikationsstandard, mit dem die Feldgeräte unmittelbar angesprochen werden, von dem Kommunikationsstandard entkoppelt werden, der beispielsweise im Netzwerk der Industrieanlage als Standard verwendet wird. Dementsprechend können beispielsweise physische Verkabelungen zu den Feldgeräten unverändert weitergenutzt werden, während zugleich das Netzwerk der Industrieanlage auf einen neuen Standard hochgerüstet wird. Ändert sich die Art der Anbindung eines Feldgeräts, beispielsweise wenn es von einer physischen I/O-Schnittstelle auf Feldbus umgestellt wird, können alle erforderlichen Anpassungen in dem Gateway zusammengefasst werden. Die Außenschnittstelle, die Ausführungsumgebung und die Vermittlungseinheit können unverändert bleiben. Das Steuergerät kommuniziert mit dem Feldgerät, und damit mit dem zu steuernden oder zu überwachenden Prozess, über ein einheitliches, konfigurierbares Datenmodell, das es mit dem Gateway teilt.

Das zusätzliche Gateway ist also eine logische Fortsetzung des Grundgedankens der Erfindung, dass eine Änderung an einer Stelle im industriellen Steuerungssystem Anpassungen nur an möglichst wenigen, genau definierten Stellen nach sich ziehen soll und dass sich an diesen Stellen möglichst wenig anderer Programmcode befinden sollte, der sich auf andere Funktionalitäten bezieht und unverändert bleiben sollte.

Dementsprechend ist das Gateway vorteilhaft dazu ausgebildet, zwischen einem Kommunikationsstandard der Außenschnittstelle einerseits und einem Kommunikationsstandard des Feldgeräts andererseits bidirektional zu übersetzen.

Das Gateway kann insbesondere das sich ständig wiederholende Sampling der vom Feldgerät gewonnenen Messdaten, das bislang vom Steuergerät übernommen wurde, durchführen. Das Steuergerät wird insoweit entlastet; es muss nur noch zur Verarbeitung anstehende Daten einlesen (copy-in) und vom Steuerprogramm generierte Ausgaben übermitteln (copy-out). Das Gateway kann die an die Außenschnittstelle übermittelten Daten aufbereiten und insbesondere verdichten, so dass die Übermittlung der Daten nicht mehr Netzlast als nötig erzeugt. Beispielsweise kann dem Gateway eine Rate vorgegeben sein, mit der es unabhängig von seiner internen Abtastrate Daten an die Außenschnittstelle liefern soll. Die Vermittlungseinheit übersetzt die von der Außenschnittstelle eintreffenden Datenpakete in Werte, die der Steuersoftware in der Copy-in-Phase zur Weiterverarbeitung zur Verfügung gestellt werden. Umgekehrt nimmt die Vermittlungseinheit in der Copy-out-Phase Daten von der Steuersoftware entgegen und sendet diese zum nächstmöglichen Zeitpunkt über die Außenschnittstelle an das Gateway. Das Gateway leitet diese Daten schließlich an das Feldgerät weiter.

Hierfür kann das Gateway beispielsweise mit einem mikroprozessorbasierten Computersystem und einer entsprechenden Software ausgestattet sein. Die Schnittstelle für die Kommunikation mit dem Feldgerät kann beispielsweise als dedizierte Hardware ausgebildet sein, etwa als feldprogrammierbares Gate-Array (FPGA) oder als anwendungsspezifischer integrierter Schaltkreis (ASIC), der ein Feldbusprotokoll implementiert.

Vorteilhaft sind die erste Schnittstelle und die Außenschnittstelle über ein Netzwerk mit geteiltem Kommunikationsmedium verbunden. Ein solches Netzwerk kann beispielsweise ein Ethernet-Netzwerk sein. Verbindungen zwischen mehreren Teilnehmern in diesen Netzwerken sind in der Regel logische Verbindungen, die nicht sofort abbrechen, wenn einer der Teilnehmer physisch vom Netz getrennt wird. Es können also beispielsweise das Gateway, die Außenschnittstelle, das Feldgerät oder andere Komponenten gewechselt werden, ohne dass der gesteuerte industrielle Prozess zwangsläufig zum Erliegen kommt. Der Prozess muss es lediglich verkraften können, dass für einen kurzen Zeitraum keine Daten fließen.

Das Gateway kann mit weiteren Funktionalitäten zur Datenanalyse ausgestattet sein, die sonst üblicherweise von Steuergeräten ausgeführt werden. Auf diese Weise können diese Funktionalitäten auf den bestehenden Prozess aufgesetzt werden, ohne dass sich aus der Sicht der bestehenden Steuersoftware etwas ändert. Beispielsweise können aufbereitete Daten über das Netzwerk an andere Stellen in der Industrieanlage weitergegeben werden.

Die Einführung des Gateways erleichtert spätere Erweiterungen des industriellen Steuerungssystems. Sowohl das Netzwerk zwischen dem Gateway und der Außenschnittstelle als auch das Netzwerk zwischen dem Gateway und dem Feldgerät können ersetzt und erweitert werden, ohne dass der industrielle Prozess zum Erliegen kommen muss.

In einer weiteren vorteilhaften Ausgestaltung der Erfindung ist das Gateway zusätzlich dazu ausgebildet, mindestens einen vom Feldgerät ermittelten Messwert zu überwachen und ein Ereignis über das Netzwerk zu kommunizieren, wenn der Messwert ein vorgegebenes Kriterium erfüllt. Auf diese Weise kann beispielsweise unabhängig von der eigentlichen Steuerlogik in der Steuersoftware eine Fehlerbehandlung implementiert werden. Beispielsweise kann eine Überwachung bestimmter Bereichsgrenzen auf diesem Wege nachträglich auch dann hinzugefügt werden, wenn das zugehörige Steuerprogramm nur als nicht editierbarer Binärcode vorliegt.

Insbesondere bei Neuentwicklungen von Steuersoftware kann weiterhin eine Modularisierung dahingehend erfolgen, dass für die Sicherheit essentielle Schutzfunktionen, die von der eigentlichen Steuerlogik unabhängig sind, auf das Gateway verlagert werden. In der Steuersoftware auf dem Steuergerät ist der Programmcode, der sich auf die Schutzfunktionen bezieht, nicht mehr mit Programmcode vermischt, der sich auf die vom Anwender frei wählbare Steuerlogik bezieht. Jede Entmischung von Programmcode, der sich auf verschiedene Funktionen bezieht, verbessert dessen Wartbarkeit und vermindert das Risiko, dass bei Anpassungen, die sich auf eine Funktion beziehen, ungewollt andere Funktionen beeinträchtigt werden.

Das Gateway kann insbesondere dazu ausgebildet sein, über das Netzwerk bidirektional mit einer Mensch-Maschine-Schnittstelle (human-machine interface, HMI) zu kommunizieren. Auf diese Weise kann das Gateway unmittelbar über die Mensch-Maschine-Schnittstelle konfiguriert werden. Weiterhin kann eine klare Trennung zwischen der automatisierten Steuerung durch das Steuergerät einerseits und der Handbedienung über die Mensch-Maschine-Schnittstelle andererseits realisiert werden, d.h., die Handbedienung muss nicht auf das Steuergerät zurückgreifen. Bei Ausfall des Steuergeräts bleibt der Prozess so zumindest rudimentär manuell steuerbar. Auch ein kurzer Zeitraum, der für das Wechseln eines Steuergeräts benötigt wird, kann durch die Handbedienung überbrückt werden.

In einer besonders vorteilhaften Ausgestaltung der Erfindung ist das Gateway ein Steuergerät für die Automatisierungstechnik, welches durch Abändern der Firmware zu seiner spezifischen Funktionalität als Gateway ausgebildet ist. Hierfür ist beispielsweise das von der Anmelderin unter dem Namen "AC 800M" angebotene Steuergerät verwendbar. Beispielsweise kann das Steuergerät in seiner üblichen Weise Daten vom Feldgerät entgegennehmen, diese dann aber nicht mehr selbst weiterverarbeiten, sondern über das Netzwerk an die Außenschnittstelle eines anderen Steuergeräts weiterleiten.

Die Vorteile, die das Gateway mit sich bringt, setzen andererseits aber auch nicht voraus, dass das Gateway von der Hardware des Steuergeräts beabstandet ist. Beide Komponenten können funktionsgetrennt auf der gleichen Hardwareplattform realisiert sein und so ein neues modulares Steuergerät bilden. Daher laufen in einer besonders vorteilhaften Ausgestaltung der Erfindung die Ausführungsumgebung und das Gateway vermittelt durch das gleiche Betriebssystem auf der gleichen Hardware. Beispielsweise können das Gateway und die Ausführungsumgebung als separate virtuelle Maschinen realisiert sein. Über das zugehörige Managementsystem können dann auch beide Funktionen gleichermaßen verwaltet werden. Insoweit impliziert der Begriff "Außenschnittstelle" nicht, dass zwingend über das Netzwerk eine Verbindung zu einem als separates Gerät gebauten Gateway hergestellt wird, sondern nur, dass die logische Funktionsgruppe der Ausführungsumgebung, in der die Steuersoftware läuft, verlassen wird.

Vorteilhaft ist die Hardware ein Steuergerät für die Automatisierungstechnik, eine speicherprogrammierbare Steuerung oder insbesondere ein Industrie-PC. Im Vergleich zu einem Steuergerät oder einer SPS ist ein Industrie-PC typischerweise mit wesentlich mehr Rechenleistung und Speicher ausgerüstet. Beide Ressourcen sind auf einem Industrie-PC wesentlich preiswerter als auf einem Steuergerät oder auf einer SPS. Weiterhin sind für einen Industrie-PC als Wirtssystem eine Vielzahl von Betriebssystemen sowie Lösungen für die Erstellung von virtuellen Maschinen am Markt verfügbar. Es kann sich daher beispielsweise auch lohnen, mehrere Steuergeräte mit Software, die für völlig verschiedene Hardwareplattformen geschrieben wurde, in einem Industrie-PC zu konsolidieren. Für bestimmte Anwendungen, etwa für die Schulung, für die Simulation oder für die Steuerung weniger zeitkritischer Vorgänge, kann auch ein Desktop-PC, ein Server oder ein Smartphone oder Tablet-PC als Hardware verwendet werden.

Wird ein Steuergerät oder eine SPS als Hardware verwendet, so kann beispielsweise die Kapazität dieses Steuergeräts über seine ursprüngliche Auslegung hinaus gesteigert werden. Beispielsweise kann durch die Auslagerung der Kommunikation mit dem Feldgerät auf das Gateway Speicherplatz und/oder Rechenleistung auf dem Steuergerät freigeschaufelt werden, die für größere und/oder komplexere Steuersoftware genutzt werden kann. Weiterhin kann das Gateway mehr Schnittstellen für die Kommunikation bereitstellen. Die Erfindung bringt also auch dann Vorteile, wenn der Anwender gar nicht am Austausch bestehender Steuergeräte interessiert ist, sondern lediglich deren Funktionalität erweitern möchte.

In einer besonders vorteilhaften Ausgestaltung der Erfindung ist das Betriebssystem, durch dessen Vermittlung die virtuelle Maschine auf der Hardware läuft, echtzeitfähig. Auf diese Weise können trotz der Virtualisierung Antwortzeiten garantiert werden, so wie dies beim unmittelbaren Ablauf der Steuersoftware auf der Hardware des Steuergeräts möglich war. Vorteilhaft sind auch das Netzwerk, das die Außenschnittstelle mit dem Gateway verbindet, sowie das Gateway selbst einschließlich seiner Schnittstellen, echtzeitfähig.

Die Ausführungsumgebung, insbesondere eine virtuelle Maschine oder eine virtuelle Hardware, die Vermittlungseinheit, das Außenschnittstelle sowie das Gateway einschließlich der darin enthaltenen Schnittstelles können insbesondere auch in Form von Software und/oder Hardware implementiert sein, die ein eigenständig verkaufbares Produkt ist. Daher bezieht sich die Erfindung nach dem zuvor Gesagten auch auf ein Computerprogrammprodukt mit maschinenlesbaren Anweisungen, die, wenn sie auf einem Computer, einem Steuergerät oder einer sonstigen Hardware ausgeführt werden, dem Computer, das Steuergerät bzw. die sonstige Hardware die Funktionalität einer Plattform gemäß der Erfindung, und/oder die Funktionalität eines darin enthaltenen Gateways im Sinne des zuvor Beschriebenen, verleihen.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Industrieanlage **100** mit Plattform **1** gemäß der Erfindung.
Figur 2: Steuergerät **105** nach dem Stand der Technik zum Vergleich.

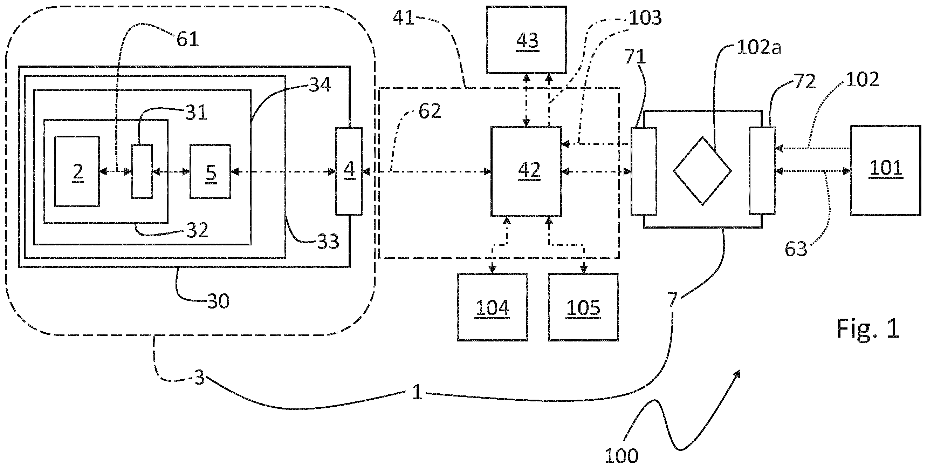

Figur **1** zeigt beispielhaft eine Industrieanlage **100,** in der ein industrielles Feldgerät **101** über eine Plattform **1** gemäß der Erfindung gesteuert wird. Auf einem Industrie-PC **30** läuft ein Betriebssystem **33** mit einer Abstraktionsschicht **34,** die der Vermittlungseinheit **5** und der virtuellen Maschine **32** unabhängig vom konkret verwendeten Betriebssystem **33** generische Systemaufrufe bereitstellt. In der virtuellen Maschine **32** läuft die Steuersoftware **2** und greift über einen ersten Kommunikationsstandard **61** auf eine virtuelle Hardware **31** zu, als würde es sich hierbei um das Feldgerät **101** handeln. Der Industrie-PC **30** bildet mit der Außenschnittstelle 4 und den innenliegenden Schichten **31, 32, 33** und **34** die Ausführungsumgebung **3** für die Steuersoftware **2.**

Die Vermittlungseinheit **5** setzt den Datenverkehr von und zu der virtuellen Hardware **31** auf den zweiten Kommunikationsstandard **62** um, der innerhalb des Netzwerks **41** der Industrieanlage **100** gilt. Die Verbindung zu dem Netzwerk **41** wird über die Außenschnittstelle **4** hergestellt. Das Netzwerk **41** ist ein Ethernet-Netzwerk mit geteiltem Medium **42.**

Über das Netzwerk wird der Datenverkehr zwischen der Außenschnittstelle **4** des Industrie-PCs **30** und der ersten Schnittstelle **71** des Gateways **7** paketvermittelt. Die Verbindung zum Feldgerät **101** wird über die zweite Schnittstelle **72** des Gateways **7** nach einem dritten Kommunikationsstandard **63** bereitgestellt. Das Gateway **7** ist dazu ausgebildet, einen vom Feldgerät **101** gelieferten Messwert **102** kontinuierlich zu überwachen und bei Vorliegen eines Kriteriums **102a** über die erste Schnittstelle **71** ein Ereignis **103** an die Mensch-Maschine-Schnittstelle **43** der Industrieanlage **100** zu senden. Über die Mensch-Maschine-Schnittstelle **43** können das Gateway **7** und das Feldgerät **101** auch direkt fernbedient werden, wenn der Industrie-PC **30** nicht läuft.

Das Gateway **7** bildet zusammen mit der Ausführungsumgebung **3** die Plattform **1** zur Ansteuerung des Feldgeräts **101.** Neben dem Industrie-PC **30,** der Mensch-Maschine-Schnittstelle **43** und dem Gateway **7** sind an dem Netzwerk **41** noch ein Ersatz-I/O-System **104** sowie ein weiteres Steuergerät **105** angeschlossen.

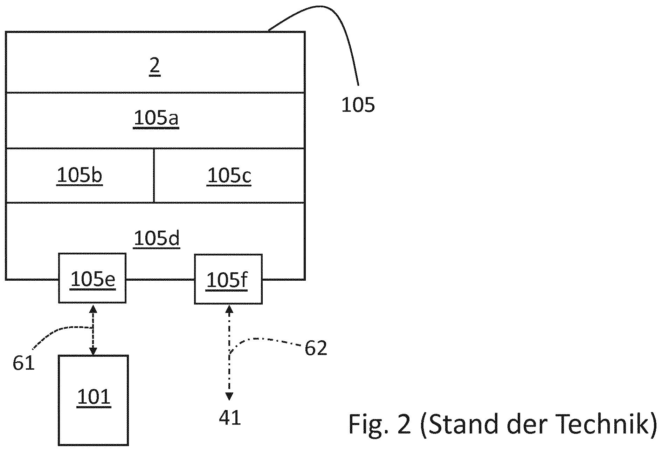

Figur 2 zeigt im Vergleich den Aufbau eines weiteren Steuergeräts **105** und die Anbindung dieses Steuergeräts **105** an das Feldgerät **101** und an das Netzwerk **41** gemäß Stand der Technik. Die Steuersoftware **2** läuft auf einer Ausführungsumgebung **105a,** die wiederum auf einem Betriebssystem **105b** läuft und sich proprietärer Hardwaretreiber **105c** bedient. Das Betriebssystem **105b** und die Hardwaretreiber **105c** greifen auf die proprietäre Hardware **105d** zu, die eine erste Schnittstelle **105e** für die Kommunikation mit dem Feldgerät **101** über den ersten Kommunikationsstandard **61** und eine zweite Schnittstelle **105f** für die Einbindung in das Netzwerk **41,** in dem der zweite Kommunikationsstandard **62** gilt, umfasst.

Im Unterschied zu Figur 1 bauen die verschiedenen Komponenten des Steuergeräts **105** aufeinander auf und wirken zusammen, sind aber dabei nicht voneinander abstrahiert und gekapselt. Jede Änderung der Hardware **105d** macht eine Änderung der Hardwaretreiber **105c** erforderlich. Spätestens der Wechsel der Hardware **105d** auf eine neue Hardwarearchitektur macht auch Änderungen am Betriebssystem **105b** notwendig. Die geänderten Hardwaretreiber **105c** machen es notwendig, die Steuersoftware **2** anzupassen, die auf diese Hardwaretreiber **105c** zugreift. Ein durch den Wechsel der Hardwarearchitektur fälliger Wechsel des Betriebssystems **105b** zieht weitere Änderungen an der Steuersoftware **2** und der Ausführungsumgebung **105a,** auf der diese Steuersoftware **2** läuft, nach sich.

### Bezugszeichenliste

- 1: Plattform
- 2: Steuersoftware
- 3: Ausführungsumgebung
- 30: physische Hardware für Ausführungsumgebung 3
- 31: virtuelle Hardware in virtueller Maschine 32
- 32: virtuelle Maschine, läuft auf Betriebssystem 33
- 33: Betriebssystem, läuft auf Hardware 30
- 34: zusätzliche Abstraktionsschicht vor Betriebssystem 33
- 4: Außenschnittstelle
- 41: Netzwerk der Industrieanlage 100
- 42: geteiltes Medium des Netzwerks 41
- 43: Mensch-Maschine-Schnittstelle der Industrieanlage 100
- 5: Vermittlungseinheit
- 61,62,63: Kommunikationsstandards
- 7: Gateway
- 71, 72: Schnittstellen des Gateways 7
- 100: Industrieanlage
- 101: Feldgerät
- 102: Messwert vom Feldgerät 101
- 102a: Kriterium für Messwert 102
- 103: Ereignis, ausgelöst nach Kriterium 102a
- 104: Ersatz-I/O-System
- 105: weiteres Steuergerät
- 105a: Ausführungsumgebung im Steuergerät 105
- 105b: Betriebssystem des Steuergeräts 105
- 105c: proprietäre Hardwaretreiber des Steuergeräts 105
- 105d: proprietäre Hardware des Steuergeräts 105
- 105e, 104f: Netzwerkschnittstelle des Steuergeräts 105

## Patentansprüche

1. Plattform (1) zur Ansteuerung mindestens eines industriellen Feldgeräts (101) in einer Industrieanlage (100) mit einer Steuersoftware (2), umfassend eine Ausführungsumgebung (3), in der die Steuersoftware lauffähig ist, sowie eine Außenschnittstelle (4) für die Kommunikation zwischen der Steuersoftware (2) und dem Feldgerät (101), wobei die Ausführungsumgebung (3) virtuelle Hardware (31) aufweist, die sich aus Sicht der Steuersoftware (2) wie das Feldgerät (101) verhält, wobei zwischen die virtuelle Hardware (31) und die Außenschnittstelle (4) eine Vermittlungseinheit (5) der Plattform (1) geschaltet ist, die dazu ausgebildet ist, zwischen der Steuersoftware (2) und der virtuellen Hardware (31) ausgetauschte Daten bidirektional für die Kommunikation mit dem Feldgerät (101) über die Außenschnittstelle (4) zu übersetzen, wobei die Steuersoftware (2) für ein konkretes Steuergerät geschrieben wurde und mit dessen Betriebssystem und Hardwaretreibern verwoben ist, wobei dieses Steuergerät ein spezialisierter, zur Ansteuerung oder Überwachung des Feldgeräts (101) ausgebildeter Computer ist,
**dadurch gekennzeichnet, dass**
• die Ausführungsumgebung (3) an die Hardware eines Ziel-Steuergeräts, auf dem die Steuersoftware laufen soll, angepasst ist und zugleich für den Typ des Steuergeräts spezifisch ist, für den die Steuersoftware (2) geschrieben wurde;
• die virtuelle Hardware (31) der Ausführungsumgebung (3) als Gerätetreiber in einem virtualisierten Betriebssystem der Ausführungsumgebung (3) vorliegt und insofern für das angesteuerte Feldgerät (101) spezifisch ist; und
• die Vermittlungseinheit (5) an die Netzwerkverbindung des Steuergeräts zum Feldgerät (101) angepasst ist und insofern für die Kombination aus einem konkret angesteuerten Feldgerät (101) und einem für die Anbindung über die Außenschnittstelle (4) verwendeten Kommunikationsstandard spezifisch ist, jedoch unabhängig ist vom Typ des Steuergeräts, für den die Steuersoftware (2) geschrieben wurde.

2. Plattform (1) nach Anspruch 1,
**dadurch gekennzeichnet, dass**
die Ausführungsumgebung (3) eine virtuelle Maschine (32) umfasst, die ihrerseits vermittelt durch ein Betriebssystem (33) auf einer Hardware (30) läuft.

3. Plattform (1) nach einem der Ansprüche 1 bis 2,
**dadurch gekennzeichnet, dass**
die virtuelle Hardware (31), die Vermittlungseinheit (5) und/oder die virtuelle Maschine (32) über eine zusätzliche Abstraktionsschicht (34) mit dem Betriebssystem (33) zusammenwirken.

4. Plattform (1) nach einem der Ansprüche 1 bis 3,
**dadurch gekennzeichnet, dass**
die Ausführungsumgebung (3) dazu ausgebildet ist, Steuersoftware (2) auszuführen, die in einer standardisierten Sprache gemäß IEC 61131-3 oder in einer proprietären Steuerprogrammsprache, insbesondere ASEA Master Programming Language oder Taylor Control Language, vorliegt.

5. Plattform (1) nach einem der Ansprüche 1 bis 4,
**dadurch gekennzeichnet, dass**
die Plattform (1) zusätzlich ein Gateway (7) umfasst, welches über eine erste Schnittstelle (71) mit der Außenschnittstelle (4) und über eine zweite Schnittstelle (72) mit dem Feldgerät (101) verbindbar ist.

6. Plattform (1) nach Anspruch 5,
**dadurch gekennzeichnet, dass**
das Gateway (7) dazu ausgebildet ist, zwischen einem Kommunikationsstandard der Außenschnittstelle (4) einerseits und einem Kommunikationsstandard des Feldgeräts (101) andererseits bidirektional zu übersetzen.

7. Plattform (1) nach einem der Ansprüche 5 bis 6,
**dadurch gekennzeichnet, dass**
das erste Schnittstelle (71) und die Außenschnittstelle (4) über ein Netzwerk (41) mit geteiltem Kommunikationsmedium (42) verbunden sind.

8. Plattform (1) nach Anspruch 7,
**dadurch gekennzeichnet, dass**
das Gateway (7) zusätzlich dazu ausgebildet ist, mindestens einen vom Feldgerät (101) ermittelten Messwert (102) zu überwachen und ein Ereignis (103) über das Netzwerk (41) zu kommunizieren, wenn der Messwert (102) ein vorgegebenes Kriterium (102a) erfüllt.

9. Plattform (1) nach einem der Ansprüche 7 bis 8,
**dadurch gekennzeichnet, dass**
das Gateway (7) zusätzlich dazu ausgebildet ist, über das Netzwerk (41) bidirektional mit einer Mensch-Maschine-Schnittstelle (43) zu kommunizieren.

10. Plattform nach Anspruch 2 und einem der Ansprüche 5 bis 9,
**dadurch gekennzeichnet, dass**
die Ausführungsumgebung (3) und das Gateway (7) vermittelt durch das gleiche Betriebssystem (33) auf der gleichen Hardware (30) laufen.

11. Plattform (1) nach Anspruch 2, **dadurch gekennzeichnet, dass**
die Hardware (30) ein Industrie-PC, ein Steuergerät für die Automatisierungstechnik oder eine speicherprogrammierbare Steuerung ist.

12. Plattform (1) nach Anspruch 2, **dadurch gekennzeichnet, dass**
das Betriebssystem (33) echtzeitfähig ist.

13. Computerprogrammprodukt, enthaltend maschinenlesbare Anweisungen, die, wenn sie auf einem Computer, einem Steuergerät oder einer sonstigen Hardware (30) ausgeführt werden, dem Computer, dem Steuergerät bzw. der sonstigen Hardware die Funktionalität einer Plattform (1) nach einem der Ansprüche 1 bis 12 verleihen.

## Claims

1. A platform (1) for driving at least one industrial field device (101) in an industrial plant (100) with a control software (2), comprising an execution environment (3) in which the control software is able to run, as well as an external interface (4) for communication between the control software (2) and the field device (101), wherein the execution environment (3) comprises virtual hardware (31) that, from the perspective of the control software (2), behaves like the field device (101), wherein a brokering unit (5) of the platform (1) is switched between the virtual hardware (31) and the external interface (4) and is configured to translate data exchanged between the control software (2) and the virtual hardware (31) bidirectionally for communication with the field device (101) via the external interface (4), wherein the control software (2) was written for a concrete control unit and is interwoven with the operating system and hardware drivers of this control unit, wherein this control unit is a specialized computer that is configured for driving or monitoring the field device (101),
**characterized in that**
• the execution environment (3) is adapted to the hardware of a target control unit on which the control software is to run and is at the same time specific for the type of control unit for which the control software (2) was written;
• the virtual hardware (31) of the execution environment (3) is present as a device driver in a virtualized operating system of the execution environment (3) and is insofar specific for the driven field device (101); and
• the brokering unit (5) is adapted to the network connection of the control unit to the field device (101) and is insofar specific for the combination of a concrete actuated field device (101) and a communication standard used for the connection via the external interface (4), but is independent from the type of control unit for which the control software (2) was written.

2. The platform (1) of claim 1,
**characterized in that**
the execution environment (3) comprises a virtual machine (32) that in turn, mediated by an operating system (33), runs on a hardware (30).

3. The platform (1) of any one of claims 1 to 2,
**characterized in that**
the virtual hardware (31), the brokering unit (5) and/or the virtual machine (32) cooperate with the operating system (33) via an additional abstraction layer (34).

4. The platform (1) of any one of claims 1 to 3,
**characterized in that**
the execution environment (3) is configured to run control software (2) that is present in a standardized language according to IEC 61131-3 or in a proprietary control program language, in particular ASEA Master Programming Language or Taylor Control Language.

5. The platform (1) of any one of claims 1 to 4,
**characterized in that**
the platform (1) further comprises a gateway (7) that is connectable to the external interface (4) via a first interface (71) and connectable to the field device (101) via a second interface (72).

6. The platform (1) of claim 5,
**characterized in that**
the gateway (7) is further configured to bidirectionally translate between a communication standard of the external interface (4) on the one hand and a communication standard of the field device (101) on the other hand.

7. The platform (1) of any one of claims 5 to 6,
**characterized in that**
the first interface (71) and the external interface (4) are connected via a network (41) with a shared communication medium (42).

8. The platform (1) of claim 7,
**characterized in that**
the gateway (7) is further configured to monitor at least one measurement value (102) determined by the field device (101) and communicate an event (103) via the network (41) if the measurement value (102) fulfils a predetermined criterion (102a).

9. The platform (1) of any one of claims 7 to 8,
**characterized in that**
the gateway (7) is further configured to bidirectionally communicate with a human-machine interface (43) via the network (41).

10. The platform of claim 2 and one of claims 5 to 9,
**characterized in that**
the execution environment (3) and the gateway (7) run on the same hardware (30), mediated by the same operating system (33).

11. The platform (1) of claim 2, **characterized in that**
the hardware (30) is an industrial PC, a control unit for automation technology, or a programmable logic controller.

12. The platform (1) of claim 2, **characterized in that**
the operating system (33) is real-time capable.

13. A computer program product, comprising machine-readable instructions that, when executed by a computer, a control unit or another hardware (30), confer the functionality of the platform (1) of any one of claims 1 to 12 to the computer, the control unit or the another hardware (30).

## Revendications

1. Plateforme (1) destinée à commander au moins un appareil de terrain industriel (101) dans une installation industrielle (100) au moyen d'un logiciel de commande (2), comprenant un environnement d'exécution (3) dans lequel le logiciel de commande peut être exécuté, ainsi qu'une interface externe (4) pour la communication entre le logiciel de commande (2) et l'appareil de terrain (101), dans lequel l'environnement d'exécution (3) comporte un matériel virtuel (31) qui, du point de vue du logiciel de commande (2), se comporte comme l'appareil de terrain (101), dans lequel une unité de commutation (5) de la plateforme (1) est connectée entre le matériel virtuel (31) et l'interface externe (4), laquelle unité est conçue pour transposer de manière bidirectionnelle les données échangées entre le logiciel de commande (2) et le matériel virtuel (31) pour les communications avec l'appareil de terrain (101) par l'intermédiaire de l'interface externe (4), dans lequel le logiciel de commande (2) a été écrit pour un appareil de commande concret et est imbriqué avec son système d'exploitation et ses pilotes matériels, dans lequel ledit appareil de commande est un ordinateur spécialisé conçu pour commander ou surveiller l'appareil de terrain (101),
**caractérisé en ce que**
• l'environnement d'exécution (3) est adapté au matériel d'un appareil de commande cible sur lequel le logiciel de commande doit être exécuté et est en même temps spécifique du type d'appareil de commande pour lequel le logiciel de commande (2) a été écrit ;
• le matériel virtuel (31) de l'environnement d'exécution (3) est présent en tant que pilote d'appareil dans un système d'exploitation virtualisé de l'environnement d'exécution (3) et est donc spécifique de l'appareil de terrain (101) commandé ; et
• l'unité de commutation (5) est adaptée à la connexion réseau de l'appareil de commande à l'appareil de terrain (101) et est à ce titre spécifique de la combinaison d'un appareil de terrain (101) concrètement commandé et d'une norme de communication utilisée pour le raccordement par l'intermédiaire de l'interface externe (4), mais est indépendante du type d'appareil de commande pour lequel le logiciel de commande (2) a été écrit.

2. Plateforme (1) selon la revendication 1, **caractérisée en ce que**
l'environnement d'exécution (3) comprend une machine virtuelle (32) qui, pour sa part, s'exécute sur un matériel (30) par l'intermédiaire d'un système d'exploitation (33).

3. Plateforme (1) selon l'une des revendications 1 à 2, **caractérisée en ce que**
le matériel virtuel (31), l'unité de commutation (5) et/ou la machine virtuelle (32) interagissent avec le système d'exploitation (33) par l'intermédiaire d'une couche d'abstraction supplémentaire (34).

4. Plateforme (1) selon l'une des revendications 1 à 3, **caractérisée en ce que**
l'environnement d'exécution (3) est conçu pour mettre en œuvre un logiciel de commande (2) qui utilise un langage normalisé selon la norme IEC 61131-3 ou un langage de programmation de commande propriétaire, notamment le langage de programmation ASEA Master Programming Language ou le langage Taylor Control.

5. Plateforme (1) selon l'une des revendications 1 à 4, **caractérisée en ce que**
la plateforme (1) comprend en outre une passerelle (7) qui peut être reliée par l'intermédiaire d'une première interface (71) à l'interface externe (4) et par l'intermédiaire d'une seconde interface (72) à l'appareil de terrain (101).

6. Plateforme (1) selon la revendication 5, **caractérisée en ce que**
la passerelle (7) est conçue pour effectuer une transposition bidirectionnelle entre une norme de communication de l'interface externe (4), d'une part, et une norme de communication de l'appareil de terrain (101), d'autre part.

7. Plateforme (1) selon l'une des revendications 1 à 6, **caractérisée en ce que**
la première interface (71) et l'interface externe (4) sont reliées par l'intermédiaire d'un réseau (41) à support de communication partagé (42).

8. Plateforme (1) selon la revendication 7, **caractérisée en ce que**
la passerelle (7) est en outre conçue pour surveiller au moins une valeur de mesure (102) déterminée par l'appareil de terrain (101) et pour communiquer un événement (103) par l'intermédiaire du réseau (41) lorsque la valeur de mesure (102) satisfait à un critère prédéfini (102a).

9. Plateforme (1) selon l'une des revendications 7 à 8, **caractérisée en ce que**
la passerelle (7) est en outre conçue pour communiquer de manière bidirectionnelle par l'intermédiaire du réseau (41) avec une interface homme-machine (43).

10. Plateforme selon la revendication 2 et l'une des revendications 5 à 9, **caractérisée en ce que**
l'environnement d'exécution (3) et la passerelle (7) s'exécutent sur le même matériel (30) par l'intermédiaire du même système d'exploitation (33).

11. Plateforme (1) selon la revendication 2, **caractérisée en ce que**
le matériel (30) est un PC industriel, un appareil de commande destiné aux techniques d'automatisation ou un automate programmable.

12. Plateforme (1) selon la revendication 2, **caractérisée en ce que**
le système d'exploitation (33) peut fonctionner en temps réel.

13. Produit de programme d'ordinateur contenant des instructions lisibles par machine qui, lorsqu'elles sont mises en œuvre sur un ordinateur, un appareil de commande ou un autre matériel (30), confèrent respectivement à l'ordinateur, à l'appareil de commande ou à l'autre matériel la fonctionnalité d'une plateforme (1) selon l'une des revendications 1 à 12.
